# EUROPEAN PATENT APPLICATION

(11) **EP 4 621 569 A1**
(43) Date of publication of application: **24.09.2025**
(21) Application number: 23893602.5
(22) Date of filing: 01.11.2023
(51) Int. Cl.: G06F 9/48, G06F 3/04817, G06F 3/04842, G06F 3/04847

(54) **MEDIA SESSION MANAGEMENT METHOD, ELECTRONIC DEVICE, AND COMPUTER-READABLE STORAGE MEDIUM**

(30) Priority: 24.11.2022 CN 202211485620
(71) Applicant: Huawei Technologies Co., Ltd., Shenzhen, Guangdong 518129 (CN)
(72) Inventor: ZHU, Chaochao, Shenzhen, Guangdong 518129 (CN)
(74) Representative: Körber, Martin Hans
(86) International application number: PCT/CN2023/129019
(87) International publication number: WO 2024/109511

(57) **Abstract**

This application discloses a multiple stacks-based media session management method, an electronic device, and a computer-readable storage medium. The method includes: A first media device plays media content through a first media application, where a first media session corresponding to the first media application is placed into a first stack for management, and the first media session is used to control a playback status of the first media application; the first media device detects a request to play the media content of the first media application through a second media device; and the first media device migrates the first media session from the first stack to a second stack. Media sessions in different states are classified and managed, so that a system can avoid incorrect invoking of a media session that has been migrated out.

## Description

This application claims priority to Chinese Patent Application No. 202211485620.X, filed with the China National Intellectual Property Administration on November 24, 2022 and entitled "MEDIA SESSION MANAGEMENT METHOD, ELECTRONIC DEVICE, AND COMPUTER-READABLE STORAGE MEDIUM", which is incorporated herein by reference in its entirety.

### TECHNICAL FIELD

The present invention relates to the field of intelligent terminal technologies, and specifically, to a media session management method, an electronic device, and a computer-readable storage medium.

### BACKGROUND

When an electronic device such as a mobile phone runs a media application, for example, Music, to play media content such as music, a media session (MediaSession) is usually created to control a playback status of the media application. In this case, media sessions created by a system for different media applications are usually placed into a unified stack for management. The stack is referred to as a local stack for managing media sessions.

After the electronic device such as the mobile phone plays media content of a currently running media application through another device, a media session corresponding to the media application is still at the top of a local stack of the mobile phone. In this case, if a user expects to control a playback status of another media application through a control center or the like of the mobile phone, the system cannot invoke a media session corresponding to the another media application in local stack, and therefore cannot control the playback status of the corresponding media application.

### SUMMARY

To resolve a current problem that media sessions in an electronic device cannot be classified and managed, this application provides a media session management method, an electronic device, and a computer-readable storage medium.

According to a first aspect, this application provides a media session management method. The method includes: A first media device plays media content through a first media application, where a first media session corresponding to the first media application is placed into a first stack for management, and the first media session is used to control a playback status of the first media application; the first media device detects a request to play the media content of the first media application through a second media device; and the first media device migrates the first media session from the first stack to a second stack.

For example, the first media device may be a local device currently operated and used by a user, the second media device may be a peer device specified by the user, the first stack may be a local stack on the local device for managing a locally created media session, and the second stack may be a migrateout stack created on the local device for managing a migrated-out media session. Therefore, according to the method provided in the first aspect, when the user performs an operation on the local device to transfer the media content played by the first media application to the peer device for playing, the local device may migrate the media session corresponding to the first media application out of the local stack and place the media session into the created migrateout stack, to classify and manage the media session.

In this way, after the media content is transferred from the local device to the peer device for playing, when the user performs an operation on the local device to play media content of another media application, a system of the local device may quickly invoke a media session corresponding to another media application specified by the user to control a playback status.

It may be understood that a process of transferring the media content between the first media device and the second media device may alternatively be implemented by performing an operation on the second media device, namely, the peer device, by the user. For example, the user may perform an operation on the peer device to start the first media application of the local device, to transfer the media content of the first media application to the peer device operated by the user for playing. This is not limited in this application.

In a possible implementation of the first aspect, that the first media device detects a request to play the media content of the first media application through a second media device includes: The first media device generates first related information of the first media session, where the first related information includes at least parameter information for creating the first media session, and media content description information of the first media application correspondingly controlled by the first media session; and the first media device sends the first related information to the second media device, where the first related information is used to construct a first simulated session on the second media device, and the first simulated session is a simulated session of the first media session.

That is, when transferring the media content of the first media application to the peer device for playing, the local device may also send related information of the media session that controls the playback status of the first media content to the peer device. The related information of the media session is, for example, the first related information of the first media session. The peer device may reconstruct the first media session based on the related information of the media session. The reconstructed first media session may be, for example, the first simulated session. Further, a system of the peer device may invoke the reconstructed first media session to control the playback status of the first media application that is run on the local device.

The first media application may be, for example, a music application or a video application. The parameter information may be, for example, identification information such as a package name or a UID of the first media application. The media content description information may be, for example, information such as a track name, an album name, an artist, and lyrics of music played by the first media application, and whether the music is added to Favorites.

It may be understood that, when transferring the media content of the first media application to the peer device for playing, the local device may synchronously perform the process of migrating the first media session from the local stack to the migrateout stack, and the process of sending the generated related information of the first media session to the peer device for reconstructing the media session. This is not limited herein.

In a possible implementation of the first aspect, that the first media device detects a request to play the media content of the first media application through a second media device further includes: The first media device receives a first control instruction for the first media application, where the first control instruction is sent by the second media device based on the first simulated session; and in response to the first control instruction, the first media device switches the playback status of the first media application to a playback status indicated by the first control instruction.

In a possible implementation of the first aspect, the switching the playback status of the first media application to a playback status indicated by the first control instruction includes: switching the media content played by the first media application to media content indicated by the first control instruction; or switching the playback status of the first media application from a play mode to a pause mode; or switching the playback status of the first media application from a pause mode to a play mode.

For example, the first control instruction may be a control instruction generated in correspondence with an operation performed by the user on the peer device, and the operation may be, for example, pausing/playing or switching to a previous song/a next song. In response to the user operation, the peer device may generate, based on the reconstructed media session, a control instruction, namely, the first control instruction, to be sent to the first media application that is run on the local device, to control the playback status of the first media application.

In a possible implementation of the first aspect, the first media device further creates a third stack; and the method further includes: The first media device receives a request indicating to play media content of a second media application, where the second media application is run on a third media device, and the third media device creates a second media session when running the second media application; and the first media device constructs a second simulated session corresponding to the second media session, and places the second simulated session into the third stack.

The third stack may be, for example, a migratein stack for managing a reconstructed media session, and the reconstructed media session is a simulated session, for example, the second simulated session, constructed by the local device based on the received related information of the media session. Therefore, in this possible implementation, when receiving the media content transferred from the peer device specified by the user for playing, the local device may also reconstruct, based on the related information of the media session transferred synchronously, the second media session, namely, the constructed second simulated session. The reconstructed second media session or the second simulated session may be placed into the created migratein stack. In this way, the system of the local device may invoke the second simulated session from the migratein stack, and remotely control a playback status of the second media application that is run on the third media device.

It may be understood that the third media device and the second media device may be a same device or different devices, and may be all peer devices relative to a local device currently operated by the user.

In a possible implementation of the first aspect, that the first media device receives a request indicating to play media content of a second media application includes: The first media device receives second related information of the second media session; and that the first media device constructs a second simulated session corresponding to the second media session includes: the first media device constructs the second simulated session based on the received second related information.

In a possible implementation of the first aspect, that the first media device creates a third stack includes: The first media device synchronously creates the first stack, the second stack, and the third stack; or the first media device creates the third stack at the same time as the first media device creates the second stack; or the first media device creates the third stack when constructing the second simulated session.

As described in the foregoing examples, the first stack is, for example, a local stack, the second stack is, for example, a migrateout stack, and the third stack is, for example, a migratein stack. Therefore, in this possible implementation, there may be a plurality of timings for creating a migratein stack on the local device. For example, when running the first media application to create the local stack for managing the first media session, the local device may synchronously create a migrateout stack and a migratein stack. For another example, after creating the local stack, the local device may alternatively synchronously create a migrateout stack and a migratein stack when detecting that the media content of the first media application is played through the second media device. For another example, the local device may alternatively create the third stack when receiving a request to play media content on the peer device. This is not limited in this application.

In a possible implementation of the first aspect, the method further includes: The first media device detects a request to play media content of a third media application, and places a third media session at the top of the first stack.

That is, when the local device detects an operation request indicated by the user to run another media application, because the first media session has been migrated out and no longer occupies a position of the top of the local stack, the local device may place a media session corresponding to the media application at the top of the local stack, for the system to invoke.

In a possible implementation of the first aspect, the method further includes: The first media device detects a request to play the media content of the first media application; the first media device migrates the first media session in the second stack back to the first stack, and places the first media session at the top of the first stack; and the first media device controls, based on the first media session, playing of the media content of the first media application.

That is, when detecting an operation request indicated by the user to replay the media content of the first media application, the local device may migrate, from the migrateout stack to the local stack, the first media session migrated to the migrateout stack, and place the first media session at the top of the local stack. In this way, the system may invoke the first media session to control the playback status of the first media application.

According to a second aspect, this application provides an electronic device, including one or more processors and one or more memories. The one or more memories store one or more programs. When the one or more programs are executed by the one or more processors, the electronic device is enabled to perform the media session management method according to any one of the first aspect or the possible implementations of the first aspect.

According to a third aspect, this application provides a computer-readable storage medium. The storage medium stores instructions. When the instructions are executed on a computer, the computer is enabled to perform the media session management method according to any one of the first aspect or the possible implementations of the first aspect.

According to a fourth aspect, this application provides a computer program product, including a computer program/instructions. When the computer program/instructions are executed by a processor, the media session management method according to any one of the first aspect or the possible implementations of the first aspect is implemented.

In conclusion, according to the media session management method, the electronic device, and the computer-readable storage medium that are provided in this application, media sessions in different states can be classified and managed in the electronic device. This can help prevent the system from incorrectly invoking a media session that has been migrated out, and may also avoid an issue or the like that the system cannot control a playback status of media content transferred to the electronic device for playing. Therefore, a media application response exception does not occur on the local device or the peer device, and user experience can also be improved.

### BRIEF DESCRIPTION OF DRAWINGS

FIG. 1A and FIG. 1B are a diagram of a distributed application scenario in which media content is played across devices according to an embodiment of this application;
FIG. 2 is a diagram of a local stack for managing media sessions according to an embodiment of this application;
FIG. 3 is a diagram of a principle in which each electronic device separately creates a migratein stack and a migrateout stack for managing media sessions on each device in a distributed scenario according to an embodiment of this application;
FIG. 4a is a block diagram of a distributed system architecture according to an embodiment of this application;
FIG. 4b is a diagram of a structure of a media session framework according to an embodiment of this application;
FIG. 5a-1 and FIG. 5a-2 are a diagram of an application scenario of a media session management method according to Embodiment 1 of this application;

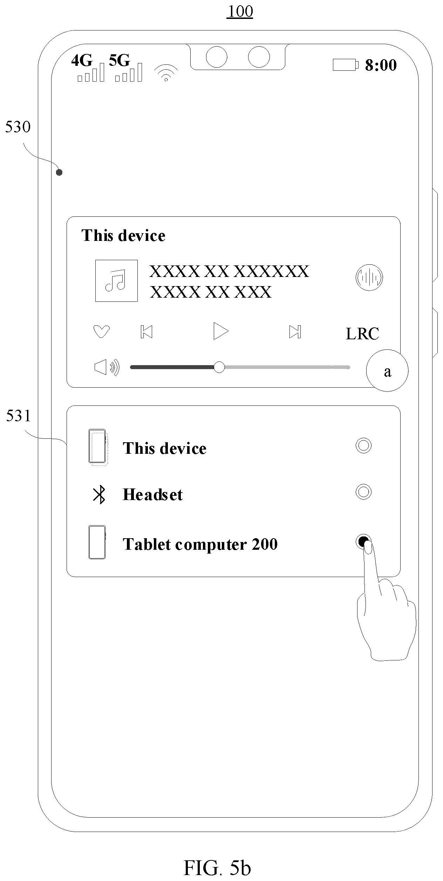

FIG. 5b is a diagram of a device selection interface according to Embodiment 1 of this application;

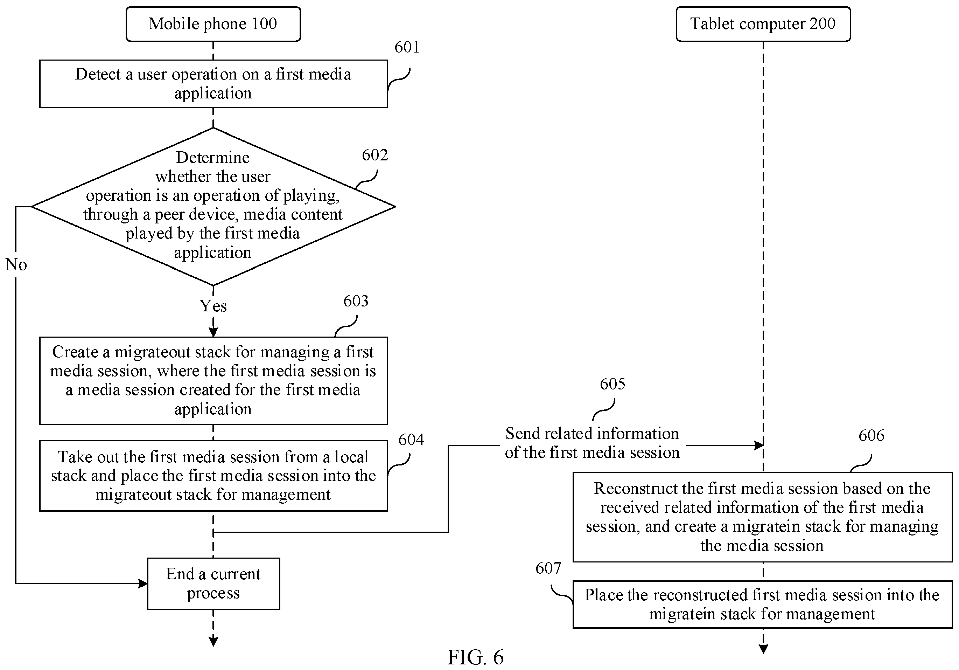

FIG. 6 is a diagram of an implementation procedure of a media session management method according to Embodiment 1 of this application;
FIG. 7a-1 and FIG. 7a-2 are a diagram of a change of an interface for displaying a control center on a local device according to Embodiment 1 of this application;

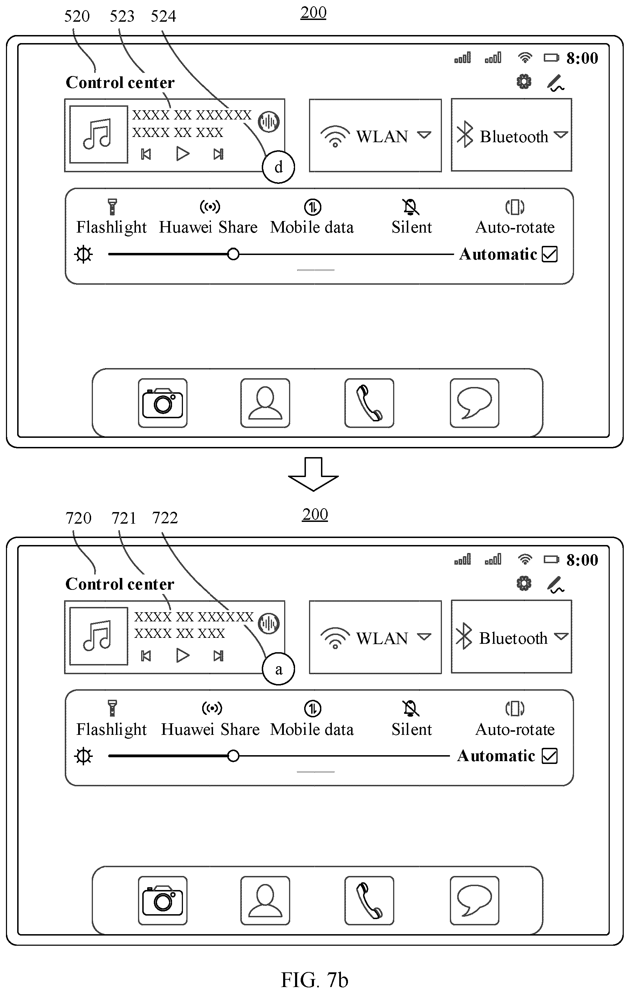

FIG. 7b is a diagram of a change of an interface for displaying a control center on a peer device according to Embodiment 1 of this application;

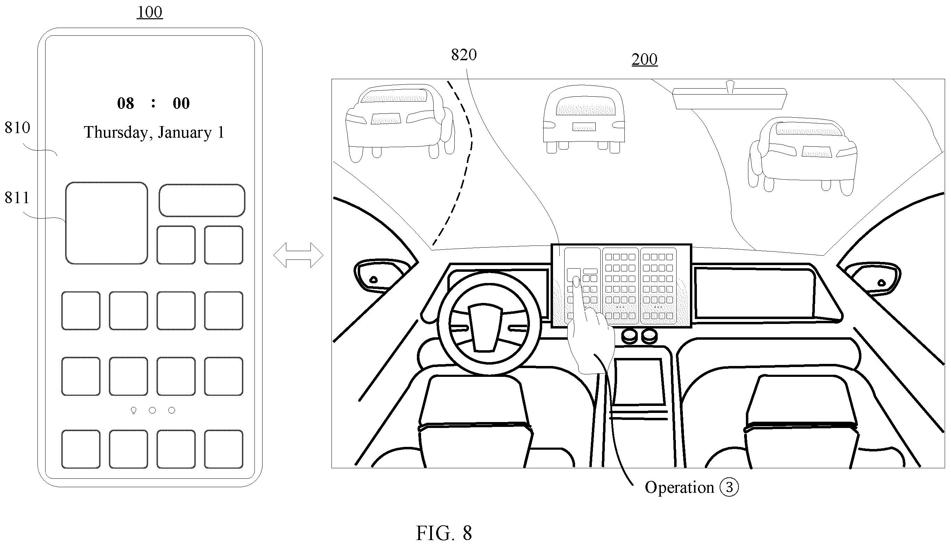

FIG. 8 is a diagram of an application scenario of a media session management method according to Embodiment 2 of this application;

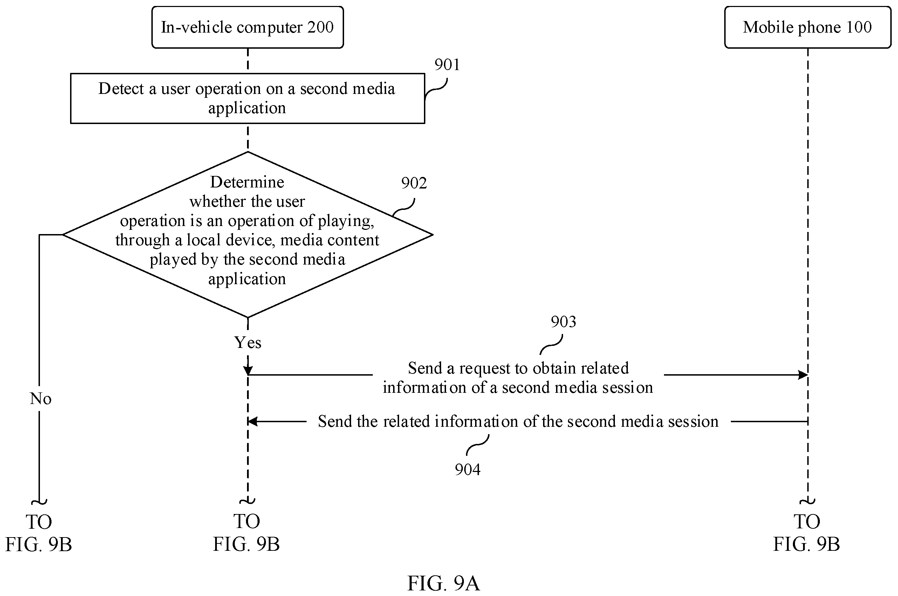

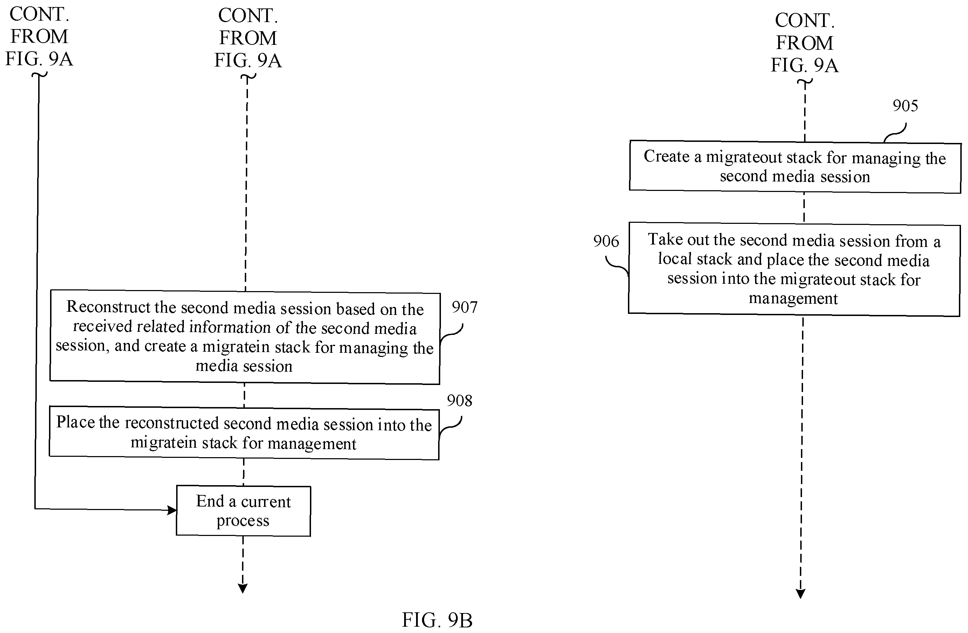

FIG. 9A and FIG. 9B are a diagram of an implementation procedure of a media session management method according to Embodiment 2 of this application;

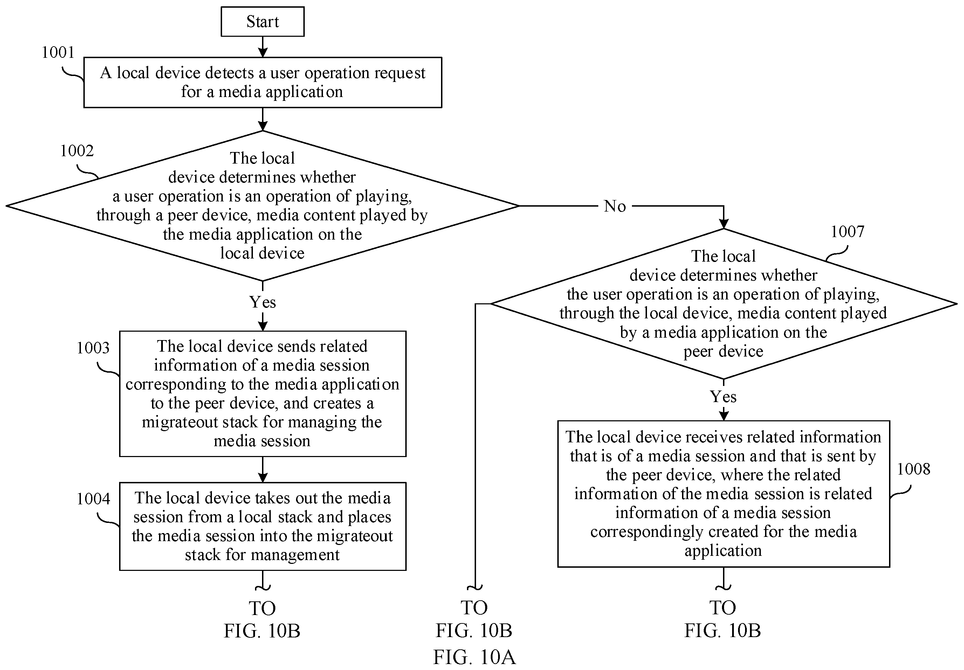

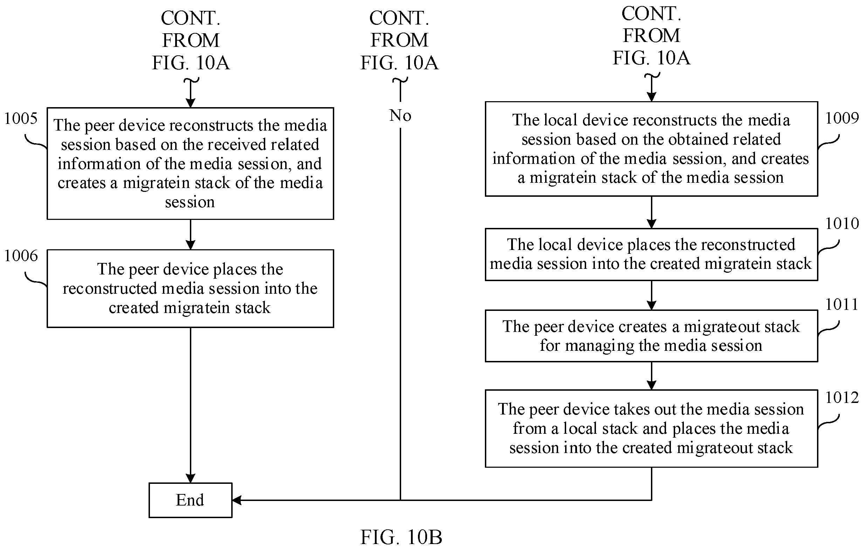

FIG. 10A and FIG. 10B are a diagram of another implementation procedure of a media session management method different from that in Embodiment 1 and Embodiment 2 according to an embodiment of this application; and

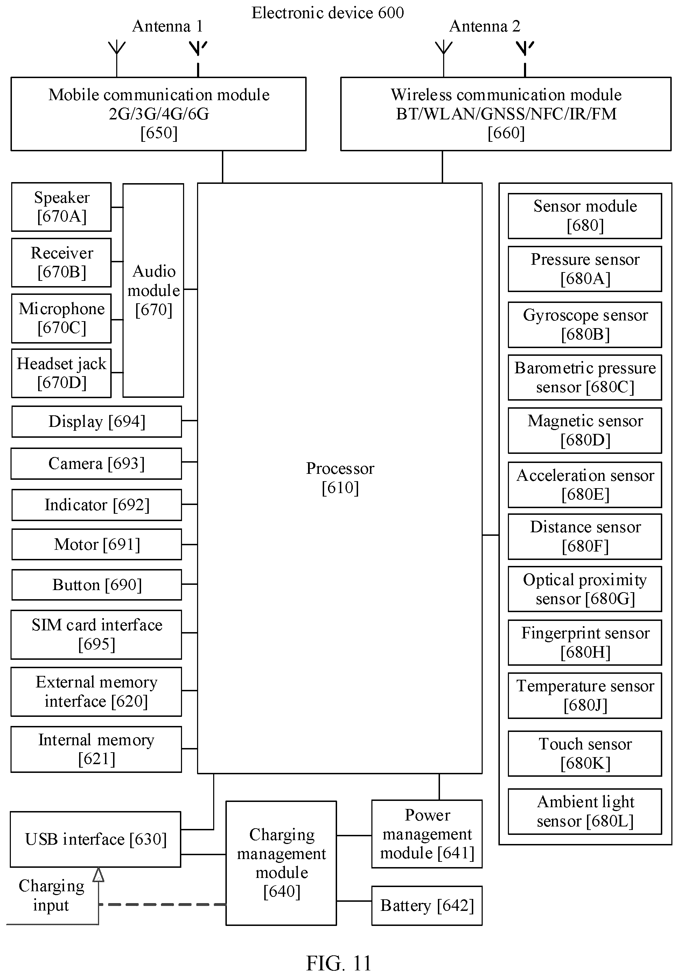

FIG. 11 is a diagram of a hardware structure of a mobile phone 100 according to an embodiment of this application.

### DESCRIPTION OF EMBODIMENTS

To make objectives, technical solutions, and advantages of embodiments of this application clearer, the following describes the technical solutions in embodiments of this application in detail with reference to the accompanying drawings and specific implementations of the specification.

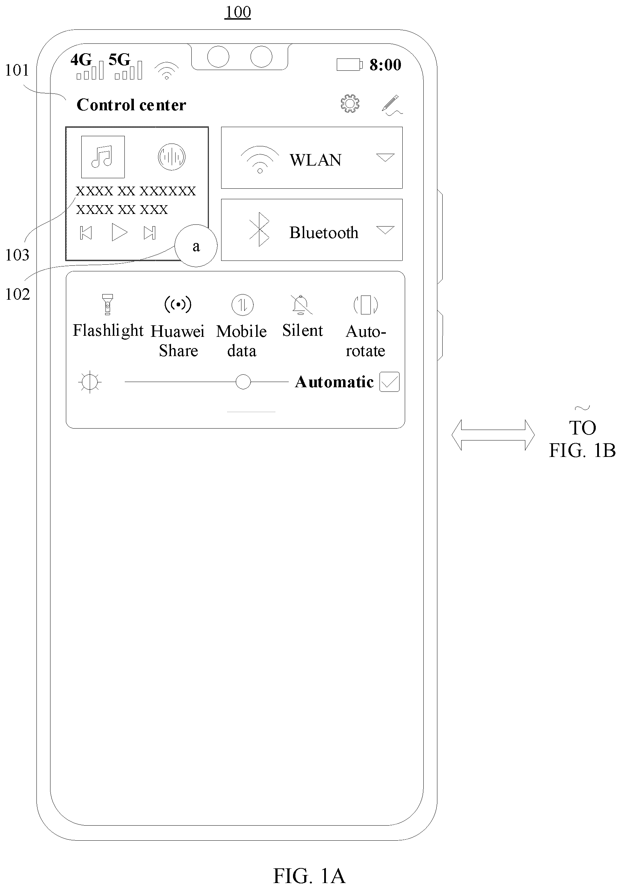

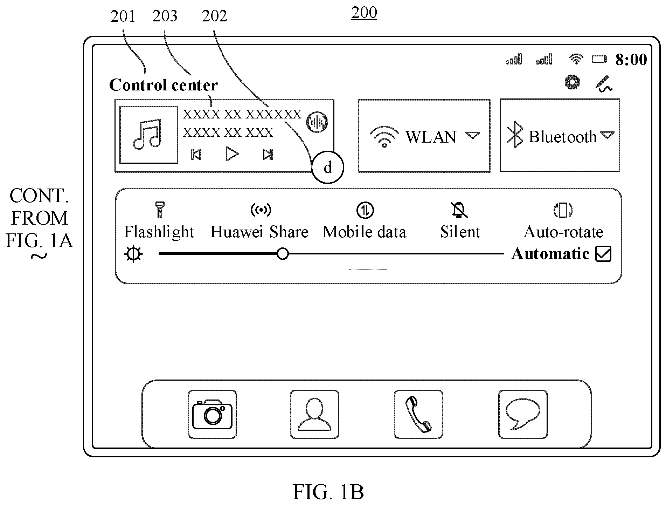

To help a person skilled in the art understand the solutions in embodiments of this application, the following first explains and describes some concepts and terms in embodiments of this application.
(1) Stack (stack), which is also referred to as a stack. The stack is a data structure in which data items are arranged in order. In the data structure, data items can be inserted or deleted at one end. This end is referred to as a top (top). Correspondingly, the other end in the data structure is fixed, and data items cannot be inserted or deleted. This end is referred to as a bottom. The stack data structure is usually applied to some specific storage areas or registers in an electronic device, and data items are accessed strictly according to a "first-in/last-out (first-in/last-out, FILO)" principle. For example, with reference to FIG. 1A and FIG. 1B, a stack for maintaining media sessions may manage, based on a sequence of running a media application and creating a corresponding media session, media sessions sequentially placed into the stack. The media session placed into the stack later may be preferentially invoked by a control center of a system. Specifically, the control center may be a pull-down control center of the electronic device, and may always display related content of a media application that is run later.
(2) Media session, which is a member class created by a media session framework of the system. The media session framework is a music playing framework provided by the system, and is configured to resolve a problem of communication between a music interface and a system service.

FIG. 1A and FIG. 1B are a diagram of a distributed application scenario according to an embodiment of this application.

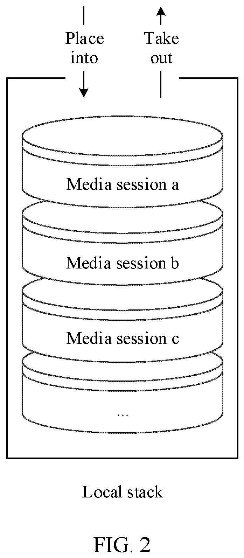

With reference to the scenario shown in FIG. 1A and FIG. 1B, a mobile phone 100 may sequentially run a plurality of media applications. For example, the mobile phone 100 first runs a music application to play music; and correspondingly, a media session may be created in a system. Then, the mobile phone 100 runs an audio application a later to play a learning audio; and correspondingly, a media session a may be created in the system. With reference to FIG. 2, the media session b correspondingly created for the running music application and the media session a correspondingly created for the running audio application a may be sequentially placed into a unified local stack for management, and the media session a created later is closer to the top. As shown in FIG. 2, if the mobile phone 100 further runs another media application c before running the music application, a correspondingly created media session c, the media session b, and the media session a may be placed into the local stack in an order shown in FIG. 2.

In this case, a control center 101 of the mobile phone 100 may display an application icon 102 of the audio application a, a name 103 of the currently played audio, and the like. In this case, a user may also perform an operation to play, through another device such as a tablet computer 200, the learning audio played by the audio application a. In this case, if the user further expects the control center 101 of the mobile phone 100 to control a playback status of the music application, the user can only find and tap an application icon of the music application on a home screen of the mobile phone 100 again, to open an interface of the music application for controlling music playing. This is because although the learning audio played by the audio application a on the mobile phone 100 has been played through the tablet computer 200, the media session a is still at the top of the local stack of the mobile phone 100. In this case, the control center of the mobile phone 100 cannot invoke the media session b to control the playback status of the music application.

Similarly, still with reference to FIG. 1A and FIG. 1B, before the tablet computer 200 receives the learning audio that is transmitted by the mobile phone 100 and that is played across devices, if another media application d is running, a control center 201 of the tablet computer 200 may display an application icon 202, playing content 203, and the like of the media application d. After receiving the learning audio played across the devices, the control center 201 of the tablet computer 200 may control the media application d to pause playing. However, because the tablet computer 200 does not have the media session a that can control a playback status of the audio application a, the control center 201 of the tablet computer 200 cannot invoke the media session a, and continues to display the application icon 202, the playing content 203, and the like of the media application d. As a result, the user cannot control the playback status of the audio application a through the control center 201 of the tablet computer 200, and consequently user experience is poor.

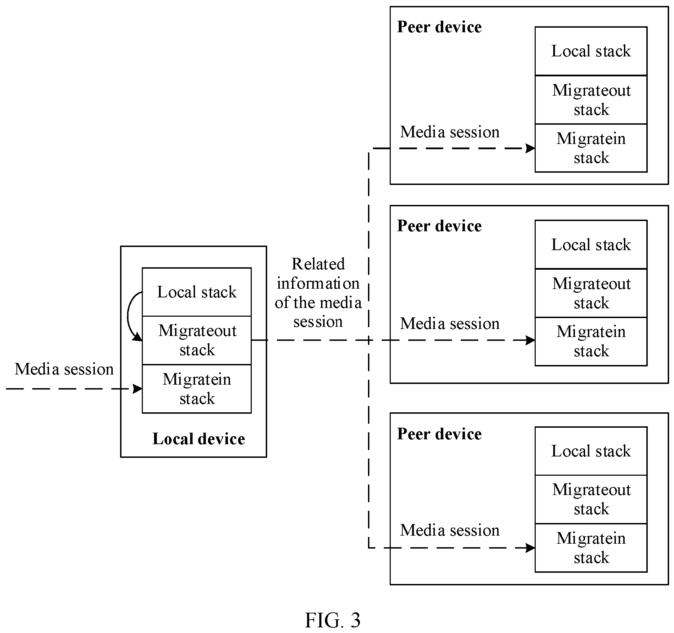

To resolve the foregoing problem, an embodiment of this application provides a media session management method, applied to an electronic device. In this method, a plurality of stacks are created in the electronic device for managing media sessions in different states. Specifically, with reference to FIG. 3, when running a media application, a local device may create a local stack for managing a media session corresponding to the locally running media application. When media content played by a media application that is run on the local device needs to be played through a peer device, the local device may create another stack as a migrateout (migrateout) stack, and a media session corresponding to the media application may be migrated from the local stack and placed into the migrateout stack for management.

If the local device receives media content specified by another device and plays the media content on the another device, the local device may further create another stack as a migratein (migratein) stack, and place a media session reconstructed based on received related information of a media session into the migratein stack, for a system of the local device to invoke. Correspondingly, the peer device may also create a plurality of stacks. A migrateout stack may manage a media session corresponding to a media content played through another device, and a migratein stack may manage a reconstructed media session. The reconstructed media session may be, for example, a media session reconstructed based on the related information that is of the media session and that is sent by the local device.

In some other examples, in addition to being implemented through a stack, in the media session management method provided in embodiments of this application, storage, classification, and management of media sessions may also be implemented through an array, a queue, a map, or the like. This is not limited herein.

It may be understood that, when transmitting media content that needs to be played across devices to the peer device, the local device may also send related information of a media session correspondingly created for a corresponding media application. The related information of the media session may include but is not limited to media content currently played by the corresponding media application, for example, a music track name, an album name, an artist, a playing progress, lyrics information, whether music is added to Favorites, and package name information corresponding to the media application. Based on the related information of the media session, the peer device may reconstruct a media session in a system. The reconstructed media session may control, across the devices on the peer device, a playback status of the corresponding media application on the local device.

It may be understood that management performed by the migrateout stack on the media session may be, for example, rejecting callback of the media session by the system or rejecting callback of a control center. Management performed by the migratein stack on the media session may be, for example, accepting callback of the media session by the system or accepting callback of a control center.

In this way, in a process of playing media content of a media application across the devices, the media session placed into the migrateout stack on the local device for management cannot be called back by the system temporarily. This may prevent the media session from being incorrectly invoked by the control center. Correspondingly, the media session placed into the migratein stack on the peer device for management may be preferentially called back by the system, to control the playback status of the media application that is run on the local device, thereby responding to an operation performed by a user on a control center of the peer device. Based on classification and management of media sessions in different states through the plurality of stacks, both the local device and the peer device can orderly control the playback status of the corresponding media application, and a media application that is run on each device can also accurately respond to an operation performed by the user on a control center of a corresponding device. In this way, a response exception does not occur, and user experience can also be improved.

It may be understood that the process of reconstructing the media session means a process of simulating a class to which an original media session belongs and a method used to reconstruct a media session having a same or similar function as the original media session. Therefore, similar to the original media session, the reconstructed media session may have a capability of communicating with a player of the corresponding media application, and a capability of invoking and controlling the player of the corresponding media application.

It may be understood that, in a process of running a media application, a media session on the peer device may control a change of media content and a change of information about a playback status, such as a playing progress. The local device may update related information of the media session in real time, and send the updated related information of the media session to the peer device, to synchronously update the related information of the media session at each end.

In some embodiments, according to the media session management method provided in embodiments of this application, content played by a plurality of media applications run on the local device may be further separately transmitted to other devices in a distributed scenario. In the distributed transmission process, the local device may manage a plurality of media sessions by using a created migrateout stack. Each media session may respectively correspond to each media application that needs to play media content across devices. Each peer device may also manage reconstructed media sessions by using a created migratein stack. Each reconstructed media session may be reconstructed based on received related information of each media session.

It may be understood that the electronic device to which the media session management method provided in embodiments of this application is applicable may include but is not limited to a mobile phone, a tablet computer, a desktop computer, a laptop computer, a handheld computer, a netbook, an augmented reality (augmented reality, AR)/virtual reality (virtual reality, VR) device, a smart television, a wearable device such as a smartwatch, an in-vehicle infotainment device, a portable game console, a portable music player, a reader device, a television with one or more processors embedded or coupled, or another electronic device that can implement audio playing.

It may be understood that an operating system to which the media session management method provided in embodiments of this application is applicable may be, for example, HarmonyOS^{™}, Android^{™}, or iOS^{™}. This is not limited herein.

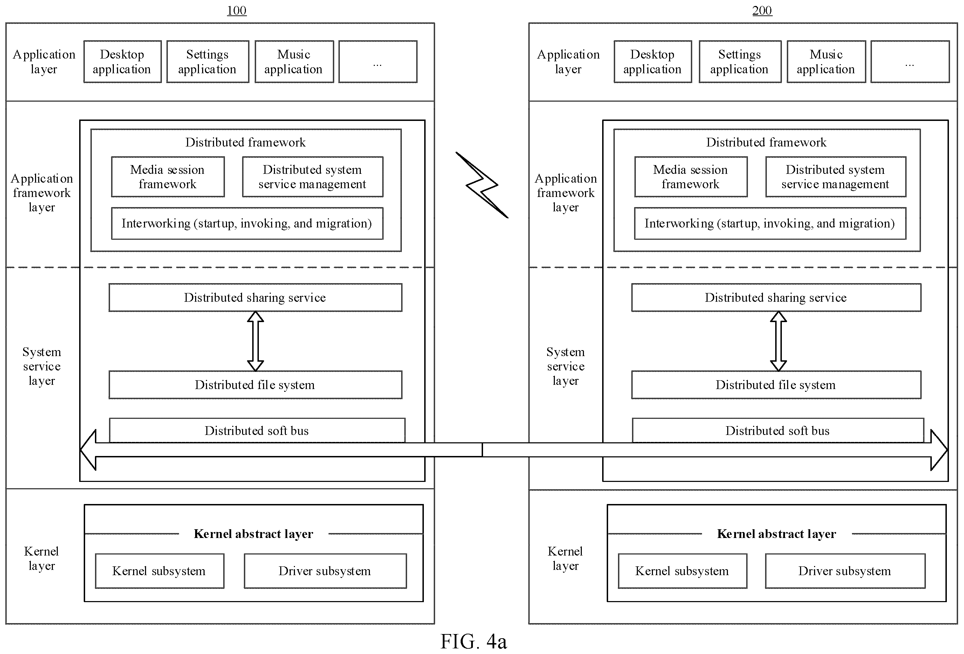

FIG. 4a is a block diagram of a distributed system architecture according to an embodiment of this application. The distributed system architecture can be used in the electronic device 100, an electronic device 200, and the like. Based on the distributed system architecture shown in FIG. 4a, the media session management method provided in embodiments of this application may be implemented through interaction between the electronic device 100 and the electronic device 200. The electronic device 100 and the electronic device 200 may be electronic devices of a same type. For example, both the electronic device 100 and the electronic device 200 are mobile phones. Alternatively, the electronic device 100 and the electronic device 200 may be electronic devices of different types. For example, the electronic device 100 may be a mobile phone, and the electronic device 200 may be an in-vehicle computer or the like. This is not limited herein.

In some other embodiments, the electronic device 100, the electronic device 200, or the like may alternatively be equipped with another operating system different from that in a distributed system shown in FIG. 4a, and establish a distributed communication connection. This is not limited herein.

As shown in FIG. 4a, the distributed system equipped on the electronic device 100 or the electronic device 200 may use a layered architecture. The layered architecture may include an application layer, an application framework layer, a system service layer, and a kernel layer.

The application layer may include a series of application packages. The application package may include, for example, applications such as a desktop (launcher), settings, and a music application, and may further include Calendar, WLAN, Bluetooth, Camera, Gallery, Phone, Map, Video, and the like. This is not limited herein. The media application includes the music application. In some other embodiments, the media application may alternatively be a video application. Such an application usually needs to invoke a media session framework in the system to create a media session, to communicate with a player of the application by using the created media session, thereby controlling a playback status of the corresponding media application. This is not limited herein.

The application framework layer may provide a distributed framework for the application layer. The distributed framework may include the media session framework, distributed system service management, a function framework for implementing intra-system and inter-system interworking (startup, invoking, and migration), and an application programming interface (application programming interface, API) corresponding to each framework.

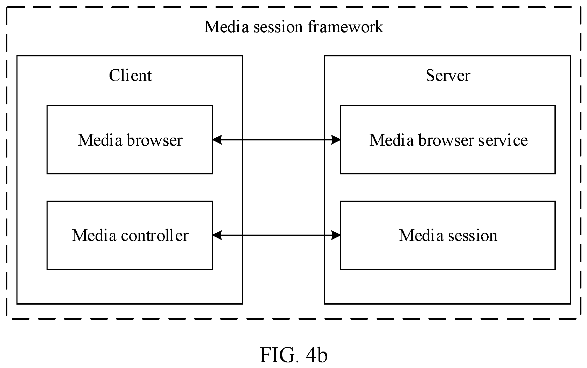

For a structure of the media session framework, refer to FIG. 4b. A client in the media session framework may include a media browser (mediabrowser) and a media controller (mediacontroller). A server in the media session framework may include a media browser service (mediabrowserservice) and a correspondingly created media session (mediasession). The media browser (mediabrowser) is used to connect to the media browser service and subscribe to data. A connection status of the media browser service and music data can be obtained through a registered callback interface. The media browser is usually created on the client.

The media browser service (mediabrowserservice) has two key callback functions: "onGetRoot" and "onLoadChildren". "onGetRoot" is used to control a connection request of the media browser of the client, and a return value determines whether a connection is allowed. "onLoadChildren" is invoked when the media browser sends a data subscription request to the server. Usually, an operation of asynchronously obtaining data is performed here, and then the data is sent back to an interface registered by the media browser.

The media controller (mediacontroller) is usually used as a control end. The client may send an instruction to the media server through the media controller, and then set a callback function by using "MediaControllerCompat.Callback" to receive a status of the server. When the media controller needs to be created, a pairing token (token) of a controlled end is required. Therefore, the media controller can be created only after the media browser is successfully connected.

The media session is usually used as a controlled end. The server may receive, by setting a "MediaSessionCompat.Callback" callback method, the instruction sent by the media controller. After receiving the instruction, the server triggers a callback method in "Callback", for example, controlling play/pause. The media session is usually created in a "Service.onCreate" method. At last, a "setSessionToken" method needs to be invoked to set a token for pairing with the media controller and notify the media browser that the service is successfully connected.

It may be understood that the media session may be used to communicate with a player (player) of a media application to control a playback status of the corresponding media application, including controlling play/pause, switching media content, and the like, to respond to a control operation performed by a user on the player. The media session may hide an application programming interface of the player for another part of the media application, and the media session may be responsible for all communication with the player. In this way, the system can control and invoke the player of the media application only through the media session.

Therefore, in a system running process, the media session can control the playback status of the corresponding media application, including controlling a playing progress, switching playing content, and the like. The media session may also receive callback of one or more media controllers in the system, including callback of a media controller of the media application, callback of a media controller of a control center in the system, callback of a controller on another electronic device equipped with a smartwatch operating system (WearOS) or an in-vehicle system, and the like. This is not limited herein.

The system service layer is a core of a distributed operating system. The system service layer provides services for applications and SDKs at the application layer through the application framework layer. The system service layer may include a distributed sharing service, a distributed file system, a distributed soft bus, and the like.

The distributed sharing service is used by electronic devices such as the mobile phone 100 and the computer 200 to provide a cross-device sharing capability.

The distributed file system is used to provide access nodes for different electronic devices to access a same file resource.

The distributed soft bus, as an example structure of an underlying network, is used to transmit display data between devices, cross-device control instructions, and the like. For understanding of a function of the distributed soft bus, refer to that of a computer hardware bus. For example, the distributed soft bus may establish an "invisible" bus between various electronic devices, and has characteristics of automatic discovery, plug-and-play, ad hoc networking (heterogeneous networking), a high bandwidth, a low delay, high reliability, and the like. By using a technology of the distributed soft bus, all devices can share all data, and can be instantly interconnected to any device that is in a same local area network or that is connected to the devices through Bluetooth. In addition, the distributed soft bus can also share a file with a heterogeneous network through Bluetooth and wireless fidelity (wireless fidelity, Wi-Fi) (for example, receive a file through Bluetooth, and transmit a file through Wi-Fi).

The kernel layer is a layer between hardware and software. The kernel layer of the distributed operating system includes a kernel subsystem and a driver subsystem. The kernel subsystem is located in the distributed operating system and may use a multi-kernel design. Therefore, the kernel subsystem supports selection of a proper OS kernel for different resource-limited devices.

A kernel abstract layer (kernel abstract layer, KAL) above the kernel subsystem shields differences between a plurality of kernels and provides basic kernel capabilities for an upper layer, including process/thread management, memory management, file system management, network management, peripheral management, and the like.

A driver framework provided by the driver subsystem is a basis for opening a hardware ecosystem of the distributed system, and provides unified peripheral access capabilities and driver development and management frameworks. The kernel layer includes at least a display driver, a camera driver, an audio driver, and a sensor driver.

Based on the distributed scenario shown in FIG. 3 and the system architecture shown in FIG. 4, the following describes in detail, with reference to the accompanying drawings, an implementation process of a media session management method according to an embodiment of this application.

An embodiment of this application provides a distributed scenario in which a local device is a mobile phone and a peer device is a tablet computer. In this scenario, a user may play, through the peer device, content played by a media application of the local device.

FIG. 5a-1 and FIG. 5a-2 are a diagram of an application scenario of a media session management method according to an embodiment of this application.

As shown in FIG. 5a-1 and FIG. 5a-2, the scenario includes a mobile phone 100 and a tablet computer 200, and a communication connection has been established between the mobile phone 100 and the tablet computer 200. The mobile phone 100 is the local device operated by the user, and the tablet computer 200 is the peer device.

When the user swipes down from the top of a screen of the mobile phone 100, the mobile phone 100 may display a control center 510. The user may tap a media button of the control center 510, for example, a device switching button 511 or a play/pause button 512, to control a first media application that is currently run on the mobile phone 100, first media content currently played, and the like.

It may be understood that the communication connection may be established between the mobile phone 100 and the tablet computer 200 in a manner such as a distributed soft bus. For example, the user may perform an operation ② on the control center 510 displayed by the mobile phone 100, so that the mobile phone 100 and the tablet computer 200 establish the connection based on the distributed soft bus. In some other examples, a connection may alternatively be established between the mobile phone 100 and the tablet computer 200 in a manner such as Wi-Fi or Bluetooth. This is not limited herein.

Similarly, when the user swipes down from the top of a screen of the tablet computer 200, the tablet computer 200 may display a control center 520. Further, the user may tap a media button of the control center 520, for example, a device switching button 521 or a play/pause button 522, to control a second media application that is currently run on the tablet computer 200, second media content currently played, and the like.

If the user expects to play, through the tablet computer 200, media content played by the first media application on the mobile phone 100, the user may tap the device switching button 511 on the control center 510 displayed by the mobile phone 100, and select the connected tablet computer 200 as the peer device, to transmit related data of the first media application that is currently run on the mobile phone 100 to the tablet computer 200. It may be understood that the transmitted related data of the first media application may include but is not limited to a media session created for a corresponding media application, media content played or displayed, and the like. In this case, transmission of related information of the corresponding media session is triggered between the mobile phone 100 and the tablet computer 200. For example, related information of the first media session on the mobile phone 100 may be transmitted to the tablet computer 200.

It may be understood that the related information that is of the media session and that is transmitted between the mobile phone 100 and the tablet computer 200 may include but is not limited to information such as a track name, an album name, an artist, a playing progress, and lyrics information of music currently played by the media application, whether the music is added to Favorites, and a package name of the media application. The tablet computer 200 serving as the peer device may reconstruct a media session in a system based on the related information of the media session, to control a playback status of the media application across devices.

In this case, the media session management method provided in this embodiment of this application may be used to process the related information that is of the media session and that is transmitted between the mobile phone 100 and the tablet computer 200 in the scenario shown in FIG. 5a-1 and FIG. 5a-2, to orderly manage one or more media sessions in the mobile phone 100 and one or more media sessions in the tablet computer 200.

FIG. 6 is a diagram of an implementation procedure of a media session management method according to an embodiment of this application.

It should be further stated that, in embodiments of this application, the steps in the method and the procedure are numbered for ease of reference, but not to limit a sequence. If there is a sequence between the steps, the text description shall prevail.

As shown in FIG. 6, the implementation procedure relates to interaction between a mobile phone 100 and a tablet computer 200. As described above, a user may perform an operation on the mobile phone 100 to trigger transmission of related information of a first media session on the mobile phone 100 to the tablet computer 200. In this operation scenario, the mobile phone 100 serves as a local device, and may detect a user operation and perform a corresponding step to trigger performing of each step in the procedure shown in FIG. 6. Correspondingly, the tablet computer 200 serves as a peer device.

In some other embodiments, the user may alternatively perform an operation on the tablet computer 200 to trigger transmission of related information of a media session. In this operation scenario, the tablet computer 200 serves as a local device, and may detect a user operation and perform a corresponding step, and the mobile phone 100 serves as a peer device. This is not limited herein.

Specifically, as shown in FIG. 6, the procedure includes the following steps.

601: The mobile phone 100 detects a user operation on a first media application.

For example, if the mobile phone 100 is running the first media application to play music, and the first media application invokes the first media session created by a media session framework of the mobile phone 100, the first media session is placed into a local stack by default for management. In this case, a control center of the mobile phone 100 may display related content of the first media application, for example, an application icon of the first media application, a track name of the played music, and a related media button.

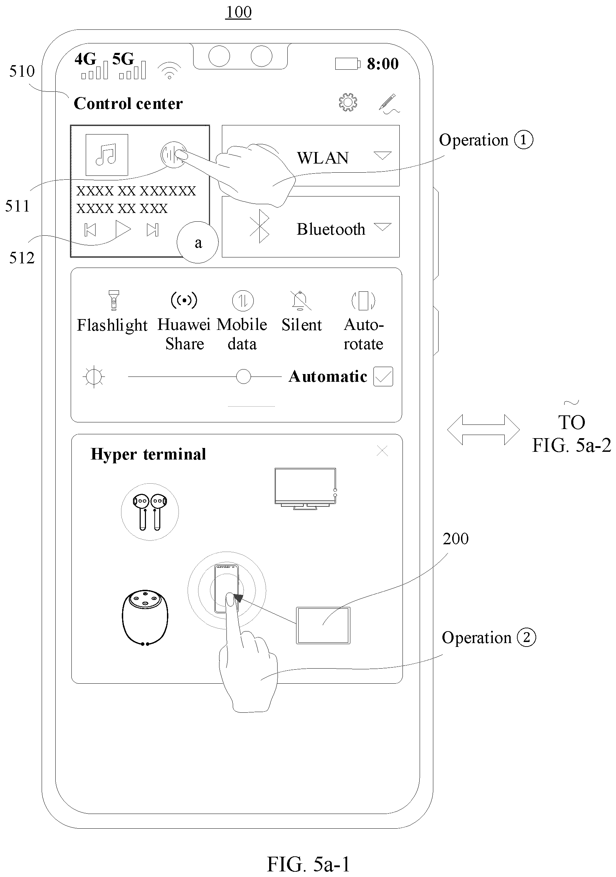

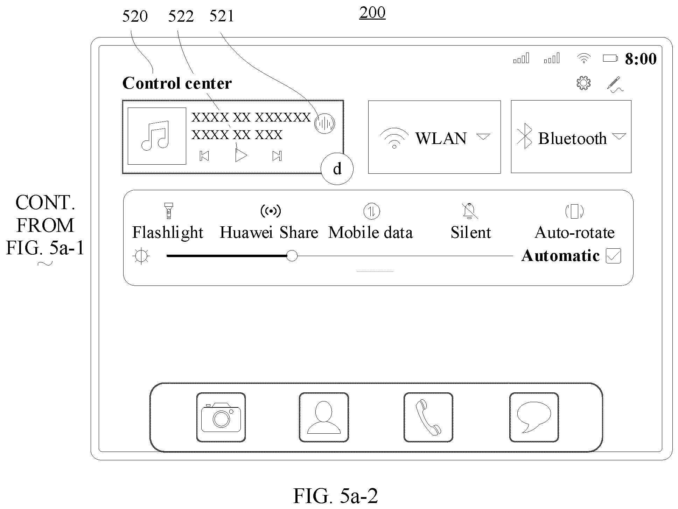

The user may perform an operation on the control center of the mobile phone 100 to play, through the tablet computer 200, the music provided by the first media application. With reference to FIG. 5a-2, for example, the user may tap the device switching button 521 on the control center 520, and the mobile phone 100 correspondingly displays a device selection interface 530 shown in FIG. 5b. Then, the user may select, as a playing device, the connected tablet computer 200 on the device selection interface 530. In this period, when detecting the user operation, the mobile phone 100 may trigger transmission of the related information of the first media session corresponding to the first media session application on the mobile phone 100 to the tablet computer 200.

In some other embodiments, the user may alternatively perform, on the local device, a cross-device operation on a media application that is run on the peer device to play corresponding media content through the local device. For details, refer to an implementation process provided in Embodiment 2 below. This is not limited herein.

602: The mobile phone 100 determines whether the user operation is an operation of playing, through the peer device, media content played by the first media application.

When a determining result is that the user operation is an operation of playing, through the peer device, media content played by the first media application , it indicates that the user operation triggers transmission of the related information of the first media session corresponding to the first media application on the mobile phone 100 to the tablet computer 200. In this case, a process of step 603 to step 607 may be performed.

When a determining result is that the user operation is not an operation of playing, through the peer device, media content played by the first media application, it indicates that the user operation is another operation. In this case, the current process may be ended.

For example, when detecting the user operation, the mobile phone 100 may determine whether the user operation indicates to play, through the tablet computer 200, the media content played by the first media application that is run on the mobile phone 100, that is, determine whether the user operation is the operation of playing, through the peer device, the media content played by the first media application. If the user operation indicates to play, through the tablet computer 200, the media content played by the first media application that is run on the mobile phone 100, the determining result is yes. If the user operation indicates not to play, through the tablet computer 200, the media content played by the first media application that is run on the mobile phone 100, the determining result is no.

It may be understood that, when the mobile phone 100 runs the first media application, the first media application may invoke a media session framework of a system to create a media session, for example, the first media session, to respond to a user operation through interaction between the media session and a player. In this case, the first media session created by the mobile phone 100 may be placed into the local stack by default for management.

603: The mobile phone 100 creates a migrateout stack for managing the first media session, where the first media session is a media session created for the first media application.

For example, when determining that the user operation is an operation of playing, through the tablet computer 200, the media content played by the first media application, the mobile phone 100 may trigger a process of transmitting the related information of the first media session corresponding to the first media application on the mobile phone 100 to the tablet computer 200. This process relates to a process of performing step 603 to step 607. In a process of performing step 603, the mobile phone 100 may create the migrateout stack for managing the first media session created for the first media application. It may be understood that, when the first media application is run, the system of the mobile phone 100 may create the first media session in response to a request of the first media application to create the first media session, and place the first media session into the local stack. The mobile phone 100 may determine the related information of the first media session in this process. It may be understood that the related information of the first media session is related information of the first media session, and includes information such as a package name of the first media application, the track name, an album name, an artist, a playing progress, and lyrics information of the music played by the first media application, and whether the music is added to Favorites. This is not limited herein.

In some other examples, when content on which step 601 is performed is transferring media content, for example, when the media content of the first media application on the mobile phone 100 is played through a device such as the tablet computer 200, step 602 may not be performed or may be deleted, and step 603 and subsequent steps 604 to 607 are directly performed.

604: The mobile phone 100 takes out the first media session from the local stack and places the first media session into the migrateout stack for management.

For example, after creating the migrateout stack, the mobile phone 100 may take out the first media session placed into the local stack by default from the stack, and place the first media session into the created migrateout stack for management. The first media session may not be called back by a media controller such as a control center of the system.

605: The mobile phone 100 sends the related information of the first media session to the tablet computer 200.

For example, when determining that the user operation is the operation of playing, through the tablet computer 200, the media content played by the first media application, the mobile phone 100 may send the related information of the first media session to the tablet computer 200.

606: The tablet computer 200 reconstructs the first media session based on the received related information of the first media session, and creates a migratein stack for managing the media session.

For example, a system of the tablet computer 200 also includes the media session framework. Therefore, the tablet computer 200 may reconstruct the first media session in the system based on the received related information of the first media session. It may be understood that, because the reconstructed first media session is not created in correspondence with the first media application being run on the tablet computer 200, the reconstructed first media session may also be referred to as a simulated media session, or briefly as a simulated session, or the like. This is not limited herein.

It may be understood that the tablet computer 200 may further create the migratein stack for managing the reconstructed first media session. In some other embodiments, the migratein stack may further manage a media session reconstructed by the tablet computer 200 based on related information that is of another media session and that is sent by another device. This is not limited herein.

607: The tablet computer 200 places the reconstructed first media session into the migratein stack for management.

For example, after creating a migrateout stack, the tablet computer 200 may take out the first media session placed into a local stack by default from the stack, and place the first media session into the created migrateout stack for management, to control the first media session not to be called back by a media controller such as a control center of the system.

It may be understood that a sequence of performing steps 604, 605, and 606 is not limited in this embodiment of this application. For example, step 604 may be performed before steps 605 and 606, or may be performed synchronously with steps 605 and 606.

Based on a process of performing steps 601 to 607 shown in FIG. 6, after the first media session corresponding to the first media application on the mobile phone 100 is placed into the migrateout stack, the first media session may not be called back by the control center. In this case, the control center of the mobile phone 100 may not display related content of the first media application. For example, the control center of the mobile phone 100 may be switched to be in an idle state. A related media button on the control center that is in this state and that is of the mobile phone 100 is set to gray or another color indicating that the media button is inoperable.

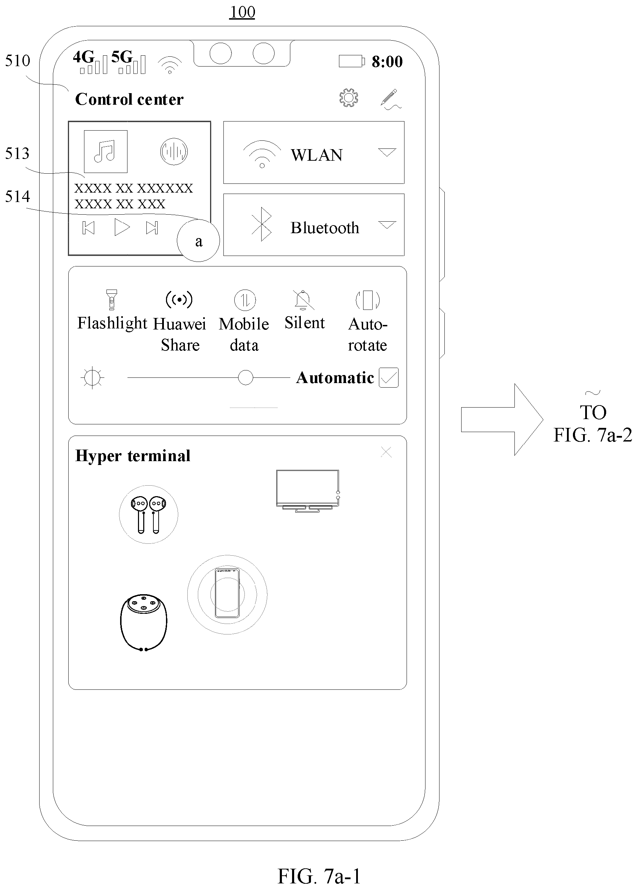

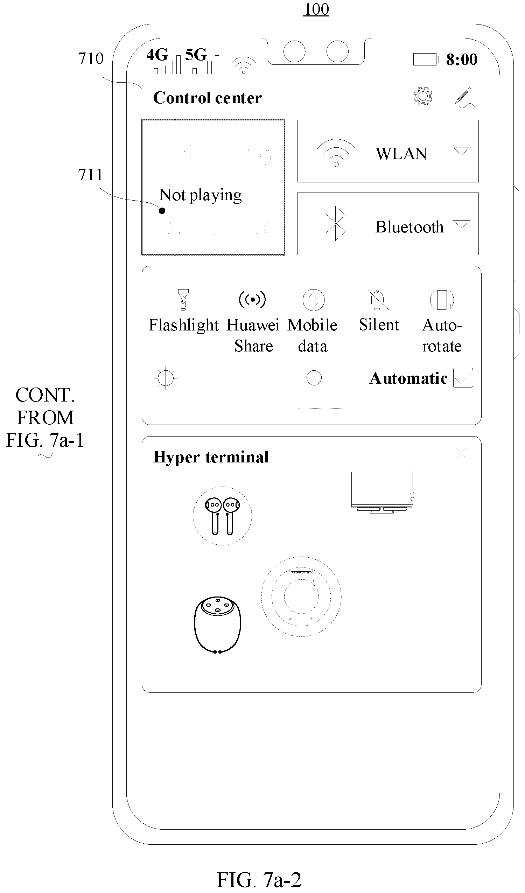

With reference to FIG. 7a-1 and FIG. 7a-2, before the media content of the first media application of the mobile phone 100 is played through the tablet computer 200, the control center 510 of the mobile phone 100 may display a track name 513 of currently played music, an application icon 514 of the first media application, and the like. After the media content of the first media application of the mobile phone 100 is played through the tablet computer 200, the mobile phone 100 may display a control center 710. As shown in FIG. 7a-2, the control center 710 may not display any track name and media application icon. In an area 711 used to display media buttons, for example, media buttons such as play/pause, a previous song, and a next song may be displayed in a gray style or another style shown in FIG. 7a-2, indicating that these media buttons are inoperable currently.

In this case, if the user taps these media buttons, the mobile phone 100 may start a default media application in a cold start manner, for example, start Huawei Music. In some embodiments, a word such as "Not playing" may be further displayed in the area 711 shown in FIG. 7a-2. This is not limited herein.

Correspondingly, after the related information of the first media session is transmitted to the tablet computer 200, the control center of the tablet computer 200 may not display a media button corresponding to a second media application that is currently run, but may switch to display a media button corresponding to the first media application.

With reference to FIG. 7b, before the tablet computer 200 plays the media content of the first media application of the mobile phone 100, the control center 520 of the tablet computer 200 may display related content of another media application, for example, a track name 523 of music currently played by a media application d run on the tablet computer 200 and an application icon 524 of the media application, for example, "d" shown in FIG. 7b. After the tablet computer 200 plays the media content of the first media application of the mobile phone 100, the tablet computer 200 may display a control center 720. As shown in FIG. 7b, the control center 720 may display the media content of the first media application, for example, display a track name 721 of music played by the first media application and an application icon 722 of the first media application, for example, "a" shown in FIG. 7b. In this case, the user may control, through the control center 720 of the tablet computer 200, a status of the corresponding media content played by the first media application that is run on the mobile phone 100.

It may be understood that the tablet computer 200 may continue to manage the reconstructed first media session in a period during which the mobile phone 100 keeps connected to the tablet computer 200. When the mobile phone 100 keeps connected to the tablet computer 200, an operation performed by the user on the control center of the tablet computer 200 may be notified to a player of the first media application based on the reconstructed first media session, and the first media application that is run on the mobile phone 100 may receive and respond to a corresponding user operation event. If a response process of the first media application causes a status such as played media content and a playing progress to change, the mobile phone 100 may transmit synchronously updated related information of the first media session to the tablet computer 200, to update the reconstructed first media session on the tablet computer 200.

In addition, if the mobile phone 100 is disconnected from the tablet computer 200, the first media session reconstructed on the tablet computer 200 cannot effectively control the first media application that is run on the mobile phone 100. In this case, the tablet computer 200 may delete the reconstructed first media session. When the mobile phone 100 is reconnected to the tablet computer 200, the tablet computer 200 may reconstruct a media session based on related information that is of a media session and that is transmitted by the mobile phone 100 again. Details are not described herein.

The following describes a specific implementation process of a media session management method according to an embodiment of this application with reference to a distributed scenario in which a local device is an in-vehicle computer and a peer device is a mobile phone. It may be understood that, in this scenario, a user may perform, on a related interface that is of the peer device and that is displayed by the local device, an operation of playing, through the local device, content played by a media application of the peer device.

Specifically, FIG. 8 is a diagram of another application scenario of a media session management method according to an embodiment of this application.

As shown in FIG. 8, the scenario also includes a mobile phone 100 and an in-vehicle computer 200, and a communication connection has been established between the mobile phone 100 and the tablet computer 200. The in-vehicle computer 200 may also be referred to as an in-vehicle infotainment system or the like in some other embodiments. This is not limited herein.

Still with reference to FIG. 8, an application icon 811 of a second media application may be displayed on a home screen 810 of the mobile phone 100. In addition, the home screen 810 of the mobile phone 100 may be displayed on the in-vehicle computer 200 across devices. The user may perform an operation ③ on an interface 820 of the in-vehicle computer, and tap, on the interface 820, the application icon that is on the home screen of the mobile phone 100 and that is displayed across the devices, to start the second media application. The operation may be equivalent to an operation that the user taps the application icon 811 on the home screen 810 of the mobile phone 100.

In this case, the mobile phone 100 may run the second media application, and control, through the in-vehicle computer 200, playing of media content played by the second media application. It may be understood that the in-vehicle computer 200 may establish a communication connection with an audio device or the like in a vehicle cockpit. Therefore, the in-vehicle computer 200 may control the audio device in the vehicle cockpit to play the media content provided by the second media application.

In a process in which the user performs the operation of starting the second media application on the mobile phone 100 across the devices through the in-vehicle computer 200, related data of the second media application on the mobile phone 100 may be triggered to be transmitted to the in-vehicle computer 200. The related data of the second media application may include but is not limited to a media session created for the corresponding media application, media content played or displayed, and the like.

In this case, the media session management method provided in this embodiment of this application may be used to process related information that is of the media session and that is transmitted between the mobile phone 100 and the in-vehicle computer 200 in the scenario shown in FIG. 8, to orderly manage one or more media sessions in the mobile phone 100 and one or more media sessions in the in-vehicle computer 200.

FIG. 9A and FIG. 9B are a diagram of another implementation procedure of a media session management method according to an embodiment of this application.

It should be further stated that, in embodiments of this application, the steps in the method and the procedure are numbered for ease of reference, but not to limit a sequence. If there is a sequence between the steps, the text description shall prevail.

As shown in FIG. 9A and FIG. 9B, the implementation procedure relates to interaction between a mobile phone 100 and an in-vehicle computer 200. As described above, a user may perform an operation on the in-vehicle computer 200 to transmit related information of a first media session on the mobile phone 100 to the in-vehicle computer 200, or may perform an operation on the mobile phone 100 to trigger transmission of related information of a second media session on the in-vehicle computer 200 to the mobile phone 100. In this operation scenario, the in-vehicle computer 200 serves as a local device, and may detect a user operation and perform a corresponding step to trigger performing of each step in the procedure shown in FIG. 9A and FIG. 9B. Correspondingly, the mobile phone 100 is a peer device.

Specifically, as shown in FIG. 9A and FIG. 9B, the procedure includes the following steps.

901: The in-vehicle computer 200 detects a user operation on a second media application.

For example, the user may tap, on an interface of the in-vehicle computer 200, an application icon that is on a home screen of the mobile phone 100 and that is displayed across devices, where the application icon may be an application icon of the second media application. In this case, the in-vehicle computer 200 may detect a user operation request for the second media application.

With reference to FIG. 8 above, for example, the user may tap the application icon that is on the home screen 810 and that is displayed on the interface 820 of the in-vehicle computer 200, to start the second media application. For a specific operation, refer to FIG. 8 and the related description. Details are not described herein again.

Correspondingly, the user operation request may also be synchronized to the mobile phone 100 based on a communication connection between the mobile phone 100 and the in-vehicle computer 200. The mobile phone 100 may run the second media application in response to the user operation request, create the second media session, and store the second media session in a local stack of the mobile phone 100 by default.

902: The in-vehicle computer 200 determines whether the user operation is an operation of playing, through the local device, media content played by the second media application.

When a determining result is that the user operation is an operation of playing, through the local device, media content played by the second media application , it indicates that the user operation triggers transmission of the related information of the second media session corresponding to the second media application on the mobile phone 100 to the in-vehicle computer 200, that is, transmission to the local device. In this case, a process of step 903 to step 908 may be performed.

When a determining result is that the user operation is not an operation of playing, through the local device, media content played by the second media application, it indicates that the user operation is another cross-device operation. In this case, the current process may be ended.

For example, when detecting the user operation, the in-vehicle computer 200 may determine whether the user operation indicates to play the media content of the second media application on the mobile phone 100 through the in-vehicle computer 200, for example, control the second media application to play media content specified by the user. In this scenario, the in-vehicle computer 200 may be the local device, and the mobile phone 100 may be the peer device. If the user operation is to control, through the in-vehicle computer 200, playing of the media content played by the second media application that is run on the mobile phone 100, the determining result is yes. If the user operation is not to control, through the in-vehicle computer 200, playing of the media content played by the second media application that is run on the mobile phone 100, the determining result is no.

903: The in-vehicle computer 200 sends a request to obtain the related information of the second media session to the mobile phone 100.

For example, when determining that the user operation is an operation of playing, through the tablet computer 200, the media content played by the first media application, the in-vehicle computer 200 may trigger a process of obtaining the related information of the second media session corresponding to the second media application from the mobile phone 100. This process relates to a process of performing step 903 to step 908.

In some other examples, when content on which step 901 is performed is transferring media content, for example, when the media content of the first media application on the mobile phone 100 is played through a device such as the in-vehicle computer 200, step 902 may not be performed or may be deleted, and step 903 and subsequent steps 904 to 907 are directly performed.

904: The mobile phone 100 sends the related information of the second media session to the in-vehicle computer 200.

For example, in response to the request to obtain the related information of the second media session, the mobile phone 100 may pack the related information of the second media session and send the packed information to the in-vehicle computer 200.

In some other embodiments, content of steps 901 and 902 may alternatively be performed by the mobile phone 100. For example, the mobile phone 100 may detect a cross-device operation performed by the user on the interface of the in-vehicle computer 200. The mobile phone 100 may determine whether the detected user operation is an operation of playing, through the in-vehicle computer 200, the media content played by the second media application. If the detected user operation is an operation of playing, through the in-vehicle computer 200, the media content played by the second media application, the mobile phone 100 may perform step 904 to send the related information of the second media session to the in-vehicle computer 200. This is not limited herein.

905: The mobile phone 100 creates a migrateout stack for managing the second media session.

Specifically, a process of performing step 905 by the mobile phone 100 is the same as a process of performing step 603 in Embodiment 1. For details, refer to the related description in step 603. Details are not described herein again.

906: The mobile phone 100 takes out the second media session from the local stack and places the second media session into the migrateout stack for management.

Specifically, a process of performing step 906 by the mobile phone 100 is the same as a process of performing step 604 in Embodiment 1. For details, refer to the related description in step 604. Details are not described herein again.

It may be understood that, in some embodiments, the mobile phone 100 may perform a process of sending the related information of the first media session to the tablet computer 200 in Embodiment 1, and also perform a process of sending the related information of the second media session to the in-vehicle computer 200 in this embodiment of this application.

In a scenario in which the mobile phone 100 interacts with a plurality of other devices, the mobile phone 100 may perform a process of creating a migrateout stack once, take out the first media session and the second media session according to a first-in/last-out (FILO) rule of the local stack, and sequentially place the first media session and the second media session into the created migrateout stack. This is not limited herein.

907: The in-vehicle computer 200 reconstructs the second media session based on the received related information of the second media session, and creates a migratein stack for managing the media session.

Specifically, a process of performing step 907 by the in-vehicle computer 200 is the same as a process of performing step 606 by the tablet computer 200 in Embodiment 1. For details, refer to the related description in step 606. Details are not described herein again.

908: The in-vehicle computer 200 places the reconstructed second media session into the migratein stack for management.

Specifically, a process of performing step 908 by the in-vehicle computer 200 is the same as a process of performing step 607 by the tablet computer 200 in Embodiment 1. For details, refer to the related description in step 607. Details are not described herein again.

It may be understood that a sequence of performing steps 904 to 908 is not limited in this embodiment of this application. For example, step 904 may be performed before step 905, or may be performed simultaneously with step 905, or may be performed after step 906. For another example, steps 905 and 906 may be performed before steps 907 and 908, or may be performed synchronously with steps 907 and 908.

Based on a process of performing steps 901 to 908 shown in FIG. 9A and FIG. 9B, after the second media session corresponding to the second media application on the mobile phone 100 is placed into the migrateout stack, the second media session may not be called back by a control center. In this case, a control center of the mobile phone 100 does not need to call back the second media session to control the playback status of the second media application. Therefore, the related content of the second media application may not be displayed.

Correspondingly, the related information of the second media session is transmitted to the in-vehicle computer 200, and the in-vehicle computer 200 may display an interface of the corresponding media content displayed by the second media application, for example, display a music playing interface or a video playing interface. In this case, the user may perform, through a screen of the in-vehicle computer 200, a corresponding control operation on a currently displayed playing interface, for example, perform an operation of switching to a next song/a previous song, adjusting a volume, displaying/hiding lyrics, and displaying/hiding an MV. The user may further perform, through a corresponding function button on a steering wheel, a corresponding control operation on media content currently played by the in-vehicle computer 200. This is not limited herein.

It may be understood that the in-vehicle computer 200 may continue to manage the reconstructed second media session in a period during which the mobile phone 100 keeps connected to the in-vehicle computer 200. When the mobile phone 100 keeps connected to the in-vehicle computer 200, an operation performed by the user on a control center of the in-vehicle computer 200 may be notified to a player of the second media application based on the reconstructed second media session, and the second media application that is run on the mobile phone 100 may receive and respond to a corresponding user operation event. If a response process of the second media application causes played media content, a playing progress, and the like to change, the mobile phone 100 may transmit synchronously updated related information of the second media session to the in-vehicle computer 200, to update the reconstructed second media session on the in-vehicle computer 200.

In addition, if the mobile phone 100 is disconnected from the in-vehicle computer 200, the second media session reconstructed on the in-vehicle computer 200 cannot effectively control the second media application that is run on the mobile phone 100. In this case, the in-vehicle computer 200 may delete the reconstructed second media session. When the mobile phone 100 is reconnected to the in-vehicle computer 200, the in-vehicle computer 200 may reconstruct a media session based on related information that is of a media session and that is transmitted by the mobile phone 100 again. Details are not described herein.

Based on the implementation processes of the media session management methods provided in Embodiment 1 and Embodiment 2 in different scenarios, it can be seen that the local device operated by the user may receive a first type of user operation, namely, an operation of indicating to play, through the peer device, media content played by a media application of the local device; and may also receive a second type of user operation, namely, an operation of indicating to play, through the local device, media content played by a media application of the peer device. Therefore, the local device may determine, based on a difference between distributed scenarios, that the received user operation belongs to the first type of user operation or the second type of user operation, and then perform each step in the procedure shown in FIG. 6 in Embodiment 1, or perform each step in the procedure shown in FIG. 9A and FIG. 9B in Embodiment 2.

In some other embodiments, in different distributed scenarios, the media session management methods provided in embodiments of this application may alternatively be implemented based on the following process of interaction between the local device and the peer device.

FIG. 10A and FIG. 10B are a diagram of another implementation procedure of a media session management method according to an embodiment of this application.

As shown in FIG. 10A and FIG. 10B, the method includes the following steps.

1001: A local device detects a user operation request for a media application.

For example, the user operation request detected by the local device may be the first type of user operation request, for example, the user operation request detected in step 601; or may be the second type of operation request, for example, the user operation request detected in the step 901. For a specific process, refer to the related description in step 601 or 901. Details are not described herein again.

1002: The local device determines whether a user operation is an operation of playing, through a peer device, media content played by the media application on the local device.

When a determining result is that an user operation is an operation of playing, through a peer device, media content played by the media application on the local device , it indicates that the detected user operation is the first type of user operation. In this case, a process of step 1003 to step 1006 may continue to be performed.

When a determining result is that an user operation is not an operation of playing, through a peer device, media content played by the media application on the local device, step 1007 continues to be performed, to further determine whether the user operation is the second type of user operation.

For example, for a determining process in which the local device performs step 1002, refer to the related description in step 602. Details are not described herein again.

1003: The local device sends related information of a media session corresponding to the media application to the peer device, and creates a migrateout stack for managing the media session.

For example, for a specific process of performing step 1003, refer to the related descriptions in steps 603 and 605. Details are not described herein again.

In some other examples, when content on which step 1001 is performed is transferring media content, for example, when media content of a first media application on the local device is played through the peer device, step 1002 may not be performed or may be deleted, and step 1003 and subsequent steps 1004 to 1006 are directly performed.

1004: The local device takes out the media session from a local stack and places the media session into the migrateout stack for management.

For example, for a specific process of performing step 1004, refer to the related description in step 604. Details are not described herein again.

1005: The peer device reconstructs the media session based on the received related information of the media session, and creates a migratein stack for managing the media session.

For example, for a specific process of performing step 1005, refer to the related description in step 606. Details are not described herein again.

1006: The peer device places the reconstructed media session into the created migratein stack.

For example, for a specific process of performing step 1006, refer to the related description in step 607. Details are not described herein again.

1007: The local device determines whether the user operation is an operation of playing, through the local device, media content played by a media application on the peer device.

When a determining result is that the user operation is an operation of playing, through the local device, media content played by a media application on the peer device, it indicates that the detected user operation is the second type of user operation. In this case, a process of step 1008 to step 1012 may continue to be performed.

When a determining result is that the user operation is not an operation of playing, through the local device, media content played by a media application on the peer device, the current process may be ended.

For example, for a determining process in which the local device performs step 1007, refer to the related description in step 902. Details are not described herein again.

1008: The local device receives related information that is of a media session and that is sent by the peer device, where the related information of the media session is related information of a media session correspondingly created for the media application.

For example, for a specific process of performing step 1008, refer to the related description in step 907. Details are not described herein again.

In some other examples, when content on which step 1001 is performed is transferring media content, for example, when media content of a second media application on the peer device is played through the local device, step 1007 may not be performed or may be deleted, and step 1008 and subsequent steps 1009 to 1012 are directly performed.

1009: The local device reconstructs the media session based on the obtained related information of the media session, and creates a migratein stack for managing the media session.

For example, for a specific process of performing step 1009, refer to the related description in step 907. Details are not described herein again.

1010: The local device places the reconstructed media session into the created migratein stack.

For example, for a specific process of performing step 1010, refer to the related description in step 908. Details are not described herein again.

1011: The peer device creates a migrateout stack for managing the media session.

For example, for a specific process of performing step 1011, refer to the related description in step 905. Details are not described herein again.

1012: The peer device takes out the media session from a local stack and places the media session into the created migrateout stack.

For example, for a specific process of performing step 1012, refer to the related description in step 906. Details are not described herein again.

Different from managing media sessions by using the local stack, the migrateout stack, and the migrateout stack, in some other examples, a container can also be used to manage media sessions. In the method, for example, each media session that needs to be managed may be placed into a session container. A migrateout mark may be added for a migrated-out media session, for example, marked as "Out"; a migratein mark may be added for a migrated-in media session, for example, marked as "In"; and a media session created in a process of running a media application locally may not be marked. In some other examples, media sessions that are in different states and that are placed into a same container for management may alternatively be distinguished in another marking manner. This is not limited herein.

FIG. 11 is a diagram of a hardware structure of an electronic device according to an embodiment of this application.

It may be understood that the electronic device may be the local device in the distributed scenario, or may be the peer device in the distributed scenario. This is not limited herein.

As shown in FIG. 11, the electronic device 600 may include a processor 610, an external memory interface 620, an internal memory 521, a universal serial bus (universal serial bus, USB) interface 630, a charging management module 640, a power management module 541, a battery 542, an antenna 1, an antenna 2, a mobile communication module 650, a wireless communication module 660, an audio module 670, a speaker 670A, a receiver 670B, a microphone 670C, a headset jack 670D, a sensor module 680, a button 690, a motor 691, an indicator 692, a camera 693, a display 694, a subscriber identity module (subscriber identity module, SIM) card interface 695, and the like. The sensor module 680 may include a pressure sensor 680A, a gyroscope sensor 680B, a barometric pressure sensor 680C, a magnetic sensor 680D, an acceleration sensor 680E, a distance sensor 680F, an optical proximity sensor 680G, a fingerprint sensor 680H, a temperature sensor 680J, a touch sensor 680K, an ambient light sensor 680L, and the like.

It may be understood that the structure shown in this embodiment of the present invention does not constitute a specific limitation on the electronic device 600. In some other embodiments of this application, the electronic device 600 may include more or fewer components than those shown in the figure, or some components may be combined, or some components may be split, or there may be a different component arrangement. The components shown in the figure may be implemented by hardware, software, or a combination of software and hardware.

The processor 610 may include one or more processing units. For example, the processor 610 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 610, and is configured to store instructions and data. In some embodiments, the memory in the processor 610 is a cache memory. The memory may store instructions or data just used or cyclically used by the processor 610. If the processor 610 needs to use the instructions or the data again, the processor 610 may directly invoke the instructions or the data from the memory. This avoids repeated access, reduces waiting time of the processor 610, and improves system efficiency.

In some embodiments, the processor 610 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like.

The I2C interface is a bidirectional synchronous serial bus, including a serial data line (Serial Data Line, SDA) and a serial clock line (Serial Clock Line, SCL). In some embodiments, the processor 610 may include a plurality of groups of I2C buses. The processor 610 may be separately coupled to the touch sensor 680K, a charger, a flash, the camera 693, and the like through different I2C bus interfaces. For example, the processor 610 may be coupled to the touch sensor 680K through the I2C interface, so that the processor 610 communicates with the touch sensor 680K through the I2C bus interface, to implement a touch function of the electronic device 600.

The I2S interface may be configured to perform audio communication. In some embodiments, the processor 610 may include a plurality of groups of I2S buses. The processor 610 may be coupled to the audio module 670 through the I2S bus, to implement communication between the processor 610 and the audio module 670. In some embodiments, the audio module 670 may transmit an audio signal to the wireless communication module 660 through the I2S interface, to implement a function of answering a call through a Bluetooth headset.

The PCM interface may also be configured to: perform audio communication, and sample, quantize, and code an analog signal. In some embodiments, the audio module 670 may be coupled to the wireless communication module 660 through a PCM bus interface. In some embodiments, the audio module 670 may alternatively transmit an audio signal to the wireless communication module 660 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 610 to the wireless communication module 660. For example, the processor 610 communicates with a Bluetooth module in the wireless communication module 660 through the UART interface, to implement a Bluetooth function. In some embodiments, the audio module 670 may transmit an audio signal to the wireless communication module 660 through the UART interface, to implement a function of playing music through a Bluetooth headset.

The MIPI interface may be configured to connect the processor 610 to a peripheral component such as the display 694 or the camera 693. The MIPI interface includes a camera serial interface (Camera Serial Interface, CSI), a display serial interface (Display Serial Interface, DSI), and the like. In some embodiments, the processor 610 communicates with the camera 693 through the CSI, to implement a photographing function of the electronic device 600. The processor 610 communicates with the display 694 through the DSI, to implement a display function of the electronic device 600.

The GPIO interface may be configured by software. The GPIO interface may be configured as a control signal or a data signal. In some embodiments, the GPIO interface may be configured to connect the processor 610 to the camera 693, the display 694, the wireless communication module 660, the audio module 670, the sensor module 680, and the like. The GPIO interface may alternatively be configured as an I2C interface, an I2S interface, a UART interface, an MIPI interface, or the like.

The USB interface 630 is an interface that conforms to a USB standard specification, and may be specifically a mini USB interface, a micro USB interface, a USB Type-C interface, or the like. The USB interface 630 may be configured to connect to a charger to charge the electronic device 600, or may be configured to transmit data between the electronic device 600 and a peripheral device, or may be configured to connect to a headset for playing an audio through the headset. The interface may be further configured to connect to another electronic device such as an AR device.

It may be understood that an interface connection relationship between the modules shown in embodiments of the present invention is merely an example for description, and does not constitute a limitation on the structure of the electronic device 600. In some other embodiments of this application, the electronic device 600 may alternatively use an interface connection manner different from that in the foregoing embodiment, or use a combination of a plurality of interface connection manners.

The charging management module 640 is configured to receive a charging input from a charger. The charger may be a wireless charger or a wired charger. In some embodiments of wired charging, the charging management module 640 may receive a charging input of a wired charger through the USB interface 630. In some embodiments of wireless charging, the charging management module 640 may receive a wireless charging input through a wireless charging coil of the electronic device 600. The charging management module 640 may further supply power to the electronic device by using the power management module 541 while charging the battery 542.

The power management module 541 is configured to connect the battery 542, the charging management module 640, and the processor 610. The power management module 541 receives inputs from the battery 542 and/or the charging management module 640, and supplies power to the processor 610, the internal memory 521, the display 694, the camera 693, the wireless communication module 660, and the like. The power management module 541 may be further configured to monitor parameters such as a battery capacity, a battery cycle count, and a battery health status (electric leakage or impedance). In some other embodiments, the power management module 541 may alternatively be disposed in the processor 610. In some other embodiments, the power management module 541 and the charging management module 640 may alternatively be disposed in a same component.

A wireless communication function of the electronic device 600 may be implemented through the antenna 1, the antenna 2, the mobile communication module 650, the wireless communication module 660, the modem processor, the baseband processor, and the like.

The antenna 1 and the antenna 2 are configured to transmit and receive an electromagnetic wave signal. Each antenna in the electronic device 600 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 650 may provide a wireless communication solution that includes 2G/3G/4G/5G or the like and that is applied to the electronic device 600. The wireless communication module 660 may provide a wireless communication solution that is applied to the electronic device 600 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. In some embodiments, in the electronic device 600, the antenna 1 and the mobile communication module 650 are coupled, and the antenna 2 and the wireless communication module 660 are coupled, so that the electronic device 600 can communicate with a network and another device by using a wireless communication technology. The wireless communication technology may include a global system for mobile communications (global system for mobile communications, GSM), a general packet radio service (General packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (Global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 600 may implement a display function through the GPU, the display 694, the application processor, and the like. The GPU is a microprocessor for image processing, and is connected to the display 694 and the application processor. The GPU is configured to: perform mathematical and geometric calculation, and render an image. The processor 610 may include one or more GPUs that execute program instructions to generate or change display information.

The display 694 is configured to display an image, a video, and the like. The display 694 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 600 may include one or N displays 694, where N is a positive integer greater than 1.

The electronic device 600 may implement a photographing function through the ISP, the camera 693, the video codec, the GPU, the display 694, the application processor, and the like.

The ISP is configured to process data fed back by the camera 693. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 693.

The camera 693 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 600 may include one or N cameras 693, where N is a positive integer greater than 1.

The digital signal processor is configured to process a digital signal, and may process another digital signal in addition to the digital image signal.

The video codec is configured to compress or decompress a digital video. The electronic device 600 may support one or more video codecs. In this way, the electronic device 600 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU may be used to implement applications such as intelligent cognition of the electronic device 600, for example, image recognition, facial recognition, voice recognition, and text understanding.

The external memory interface 620 may be configured to connect to an external memory card, for example, a micro SD card, to extend a storage capability of the electronic device 600. The external memory card communicates with the processor 610 through the external memory interface 620, to implement a data storage function. For example, files such as music and videos are stored in the external memory card.

The internal memory 521 may be configured to store computer-executable program code. The executable program code includes instructions. The internal memory 521 may include a program storage area and a data storage area. The program storage area may store an operating system, an application required by at least one function (for example, a sound playing function or an image playing function), and the like. The data storage area may store data (for example, audio data and an address book) and the like that are created during use of the electronic device 600. In addition, the internal memory 521 may include a high-speed random access memory, or may include a non-volatile memory, for example, at least one magnetic disk storage component, a flash memory, or a universal flash storage (universal flash storage, UFS). The processor 610 runs instructions stored in the internal memory 521 and/or instructions stored in the memory disposed in the processor, to perform various function applications of the electronic device 600 and data processing.

The electronic device 600 may implement an audio function, for example, music playing or recording, through the audio module 670, the speaker 670A, the receiver 670B, the microphone 670C, the headset jack 670D, the application processor, and the like.

The audio module 670 is configured to convert digital audio information into an analog audio signal for output, and is further configured to convert an analog audio input into a digital audio signal. The audio module 670 may be further configured to encode and decode an audio signal. In some embodiments, the audio module 670 may be disposed in the processor 610, or some functional modules in the audio module 670 are disposed in the processor 610.

The speaker 670A, also referred to as a "loudspeaker", is configured to convert an audio electrical signal into a sound signal. The electronic device 600 may be used to listen to music or answer a call in a hands-free mode over the speaker 670A.

The receiver 670B, also referred to as an "earpiece", is configured to convert an audio electrical signal into a sound signal. When a call is answered or voice information is received through the electronic device 600, the receiver 670B may be put close to a human ear to listen to a voice.

The microphone 670C, also referred to as a "mike" or a "mic", is configured to convert a sound signal into an electrical signal. When making a call or sending voice information, the user may make a sound by using a human mouth close to the microphone 670C, and input a sound signal to the microphone 670C. At least one microphone 670C may be disposed in the electronic device 600. In some other embodiments, two microphones 670C may be disposed in the electronic device 600, to collect a sound signal and further implement a noise reduction function. In some other embodiments, three, four, or more microphones 670C may alternatively be disposed in the electronic device 600, to collect a sound signal, implement noise reduction, and identify a sound source, thereby implementing a directional recording function and the like.

The headset jack 670D is configured to connect to a wired headset. The headset jack 670D may be the USB interface 630, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 680A is configured to sense a pressure signal, and can convert the pressure signal into an electrical signal. In some embodiments, the pressure sensor 680A may be disposed on the display 694. There are a plurality of types of pressure sensors 680A, such as a resistive pressure sensor, an inductive pressure sensor, and a capacitive pressure sensor. The capacitive pressure sensor may include at least two parallel plates made of conductive materials. When a force is applied to the pressure sensor 680A, a capacitance between electrodes changes. The electronic device 600 determines pressure intensity based on a capacitance change. When a touch operation is performed on the display 694, the electronic device 600 detects intensity of the touch operation through the pressure sensor 680A. The electronic device 600 may also calculate a touch location based on a detection signal of the pressure sensor 680A. In some embodiments, touch operations that are performed in a same touch position but have different touch operation intensity may correspond to different operation instructions.

The gyroscope sensor 680B may be configured to determine a motion posture of the electronic device 600. In some embodiments, an angular velocity of the electronic device 600 around three axes (namely, axes x, y, and z) may be determined through the gyroscope sensor 680B. The gyroscope sensor 680B may be configured to implement image stabilization during photographing. For example, when the shutter is pressed, the gyroscope sensor 680B detects an angle at which the electronic device 600 jitters, calculates, based on the angle, a distance for which a lens module needs to compensate, and allows the lens to cancel the jitter of the electronic device 600 through reverse motion, to implement image stabilization. The gyroscope sensor 680B may also be used in a navigation scenario and a somatic game scenario.

The acceleration sensor 680E may detect accelerations in various directions (usually on three axes) of the electronic device 600. When the electronic device 600 is still, a magnitude and a direction of gravity may be detected. The acceleration sensor 680E may be further configured to identify a posture of the electronic device, and is used in an application such as switching between a landscape mode and a portrait mode or a pedometer.

The fingerprint sensor 680H is configured to collect a fingerprint. The electronic device 600 may use a feature of the collected fingerprint to implement fingerprint-based unlocking, application lock access, fingerprint-based photographing, fingerprint-based call answering, and the like.

The touch sensor 680K is also referred to as a "touch component". The touch sensor 680K may be disposed on the display 694, and the touch sensor 680K and the display 694 form a touchscreen, which is also referred to as a "touch screen". The touch sensor 680K is configured to detect a touch operation performed on or near the touch sensor. The touch sensor may transfer the detected touch operation to the application processor to determine a type of a touch event. A visual output related to the touch operation may be provided through the display 694. In some other embodiments, the touch sensor 680K may alternatively be disposed on a surface of the electronic device 600 at a location different from a location of the display 694.

The button 690 includes a power button, a volume button, and the like. The button 690 may be a mechanical button, or may be a touch button. The electronic device 600 may receive a button input, and generate a button signal input related to user setting and function control of the electronic device 600.

The motor 691 may generate a vibration prompt. The motor 691 may be configured to provide an incoming call vibration prompt and a touch vibration feedback. For example, touch operations performed on different applications (for example, photographing and audio playing) may correspond to different vibration feedback effects. For touch operations performed on different areas of the display 694, the motor 691 may also correspond to different vibration feedback effects. Different application scenarios (for example, time reminding, information receiving, an alarm clock, and a game) may also correspond to different vibration feedback effects. The touch vibration feedback effect may be further customized.

The indicator 692 may be an indicator light, and may be configured to indicate a charging status and a power change, or may be configured to indicate a message, a missed call, a notification, and the like.

The SIM card interface 695 is configured to connect to a SIM card. The SIM card may be inserted into the SIM card interface 695 or removed from the SIM card interface 695, to implement contact with or separation from the electronic device 600.

The use of "one embodiment" or "an embodiment" in the specification means that particular features, structures, or characteristics described with reference to the embodiment are included in at least one example implementation solution or technology disclosed according to embodiments of this application. The phrase "in one embodiment" appearing in various places in the specification does not necessarily all mean a same embodiment.

The disclosure of embodiments of this application further relates to an apparatus for performing operations in the text. The apparatus may be constructed dedicatedly for the required purpose or may include a general-purpose computer that is selectively activated or reconfigured by a computer program stored in the computer. Such a computer program may be stored on a computer-readable medium, for example, but is not limited to any type of disk, including a floppy disk, a compact disc, a CD-ROM, a magneto-optical disk, a read-only memory (ROM), a random access memory (RAM), an EPROM, an EEPROM, a magnetic or optical card, an application-specific integrated circuit (ASIC), and any type of medium suitable for storing electronic instructions. In addition, each of them may be coupled to a computer system bus. Moreover, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, the disclosure of embodiments of this application is intended to describe but not to limit the scope of the concepts discussed in the specification.

## Claims

1. A media session management method, comprising:
playing, by a first media device, media content through a first media application, wherein a first media session corresponding to the first media application is placed into a first stack for management, and the first media session is used to control a playback status of the first media application;
detecting, by the first media device, a request to play the media content of the first media application through a second media device; and
migrating, by the first media device, the first media session from the first stack to a second stack.

2. The method according to claim 1, wherein the detecting, by the first media device, a request to play the media content of the first media application through a second media device comprises:
generating, by the first media device, first related information of the first media session, wherein the first related information comprises at least parameter information for creating the first media session, and media content description information of the first media application correspondingly controlled by the first media session; and
sending, by the first media device, the first related information to the second media device, wherein the first related information is used to construct a first simulated session on the second media device, and the first simulated session is a simulated session of the first media session.

3. The method according to claim 1 or 2, wherein the detecting, by the first media device, a request to play the media content of the first media application through a second media device further comprises:
receiving, by the first media device, a first control instruction for the first media application, wherein the first control instruction is sent by the second media device based on the first simulated session; and
in response to the first control instruction, switching, by the first media device, the playback status of the first media application to a playback status indicated by the first control instruction.

4. The method according to claim 3, wherein the switching the playback status of the first media application to a playback status indicated by the first control instruction comprises:
switching the media content played by the first media application to media content indicated by the first control instruction; or
switching the playback status of the first media application from a play mode to a pause mode; or
switching the playback status of the first media application from a pause mode to a play mode.

5. The method according to any one of claims 1 to 4, wherein the first media device further creates a third stack; and
the method further comprises:
receiving, by the first media device, a request indicating to play media content of a second media application, wherein the second media application is run on a third media device, and the third media device creates a second media session when running the second media application; and
constructing, by the first media device, a second simulated session corresponding to the second media session, and placing the second simulated session into the third stack.

6. The method according to claim 5, wherein the receiving, by the first media device, a request indicating to play media content of a second media application comprises:
receiving, by the first media device, second related information of the second media session; and
the constructing, by the first media device, a second simulated session corresponding to the second media session comprises:
constructing, by the first media device, the second simulated session based on the received second related information.

7. The method according to claim 5 or 6, wherein that the first media device further creates a third stack comprises:
the first media device synchronously creates the first stack, the second stack, and the third stack; or
the first media device creates the third stack at the same time as the first media device creates the second stack; or
the first media device creates the third stack when constructing the second simulated session.

8. The method according to any one of claims 5 to 7, wherein the method further comprises:
detecting, by the first media device, a request to play media content of a third media application, and placing the third media session at the top of the first stack.

9. The method according to any one of claims 1 to 8, wherein the method further comprises:
detecting, by the first media device, a request to play the media content of the first media application;
migrating, by the first media device, the first media session in the second stack back to the first stack, and placing the first media session at the top of the first stack; and
controlling, by the first media device based on the first media session, playing of the media content of the first media application.

10. An electronic device, comprising one or more processors and one or more memories, wherein the one or more memories store one or more programs; and when the one or more programs are executed by the one or more processors, the electronic device is enabled to perform the media session management method according to any one of claims 1 to 9.

11. A computer-readable storage medium, wherein the storage medium stores instructions; and when the instructions are executed on a computer, the computer is enabled to perform the media session management method according to any one of claims 1 to 9.
